# EUROPEAN PATENT APPLICATION

(11) **EP 2 787 435 A1**
(43) Date of publication of application: **08.10.2014**
(21) Application number: 14163535.9
(22) Date of filing: 04.04.2014
(51) Int. Cl.: G06F 9/445, G06F 11/36

(54) **Compilation validation**

(30) Priority: 05.04.2013 US 201361808935 P
(71) Applicant: 2236008 Ontario Inc., Waterloo, ON N2K 0A7 (CA)
(72) Inventor: Azim, Akramul, Toronto, Ontario M4C 5A2 (CA); Hobbs, Christopher William Lewis, Kanata, Ontario K2K 0B3 (CA)
(74) Representative: Roberts, Gwilym Vaughan

(57) **Abstract**

A system and method for compilation validation uses a second compiler, in addition to the compiler under test, to generate intermediate code (a.k.a. certificates). A checker processes the output of the two compilers and generates a statement of correctness regarding the output of the compiler under test.

## Description

### BACKGROUND

### 1. Cross-Reference to Related Applications

This application claims priority from U.S. Provisional Patent Application Serial No. 61/808,935, filed April 5th, 2013, the entirety of which is incorporated herein by reference.

### 2. Technical Field

The present disclosure relates to the field of validating computer executable instructions. In particular, to a system and method for compilation validation.

### 3. Related Art

Software applications depend on the integrity of the compiler that converts source code to an executable form. A compiler is an extremely complex program and, for mission- or safety-critical applications, it may be necessary to be able to produce evidence that the compiler has produced valid output. The term "compiler" describes the tools needed to get from source code to executable code (e.g., compiler, assembler, linker, loader, etc.). Code conversion may be confirmed by a compiler validation.

Demonstrating that a compiler operates correctly for any source program processed by the compiler can be an extremely difficult task and the resulting demonstration will be fragile. Compiler validation has to be repeated after each and every change to the compiler and for each different host computer on which the compiler is run. It is also essential to demonstrate that the compiler does not silently produce any output for an incorrect source program.

### BRIEF DESCRIPTION OF DRAWINGS

The system and method may be better understood with reference to the following drawings and description. The components in the figures are not necessarily to scale, emphasis instead being placed upon illustrating the principles of the disclosure. Moreover, in the figures, like referenced numerals designate corresponding parts throughout the different views.
Fig. 1 is a schematic representation of a system for source code specific compilation validation.
Fig. 2 is a schematic representation of another system for source code specific compilation validation.
Fig. 3 is a schematic representation of a system for compilation validation.
Fig. 4 is another schematic representation of a system for compilation validation.
Fig. 5 is a representation of a method for compilation validation.
Fig. 6 is further schematic representation of a system for compilation validation.

Other systems, methods, features and advantages will be, or will become, apparent to one with skill in the art upon examination of the following figures and detailed description. It is intended that all such additional systems, methods, features and advantages be included with this description and be protected by the claims that follow.

### DETAILED DESCRIPTION

Compilation validation may be an alternative to compiler validation. Compilation validation may answer the question "is this particular compilation correct?" without the need to determine whether every compilation of any possible source code is correct.

Compilation validation has several advantages that may overcome some of challenges of compiler validation. It is easier to demonstrate the correctness of a compilation than the correctness of the compiler because it is usually easier to check the result of an algorithm than the algorithm itself. Compilation validation may be unaffected by changes to the compiler-no additional work may be needed when changes are made. Compilation validation may be used with optimizing compilers-these compilers are notoriously difficult to validate.

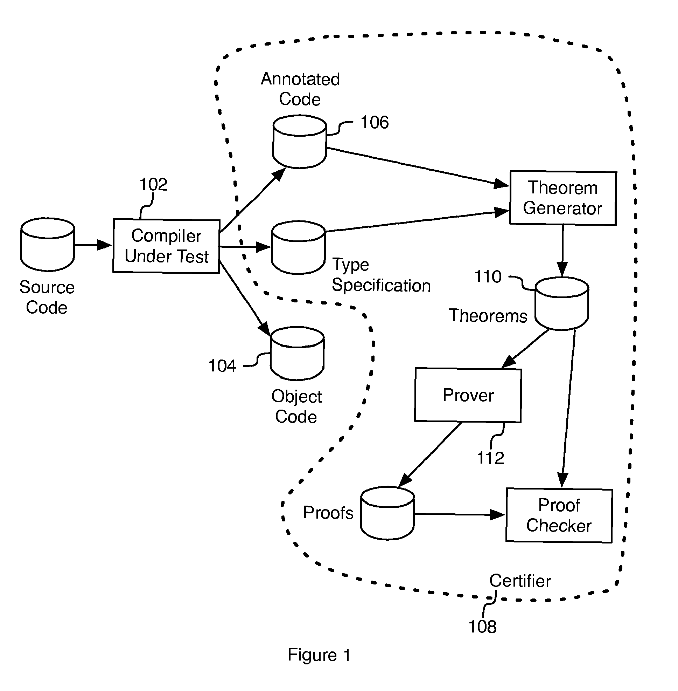

Figure 1 is a schematic of a system for source code specific compilation validation as described by George C. Necula and Peter Lee, 'The design and implementation of a certifying compiler', in Jack W. Davidson, Keith D. Cooper, and A. Michael Berman, editors, PLDI, pages 333-344. ACM, 1998, the entirety of which is incorporate herein by reference.

The compiler under test 102 is modified to produce not only the object code 104 but also an annotated version of the assembler code 106 (e.g., for a Digital Equipment Corporation (DEC) Alpha workstation) that allows a certifier 108 to produce a safety predicate (theorem) 110 for each function that will be true if, and only if, the assembler code is memory- and type-safe. A prover 112 then attempts to prove the predicate.

This technique relies on the changes introduced into the compiler under test 102 being correct. Microsoft Corporation's Verifying C Compiler (VCC) uses a variant of this technique where the programmer is required to embed the correctness requirements into the code itself.

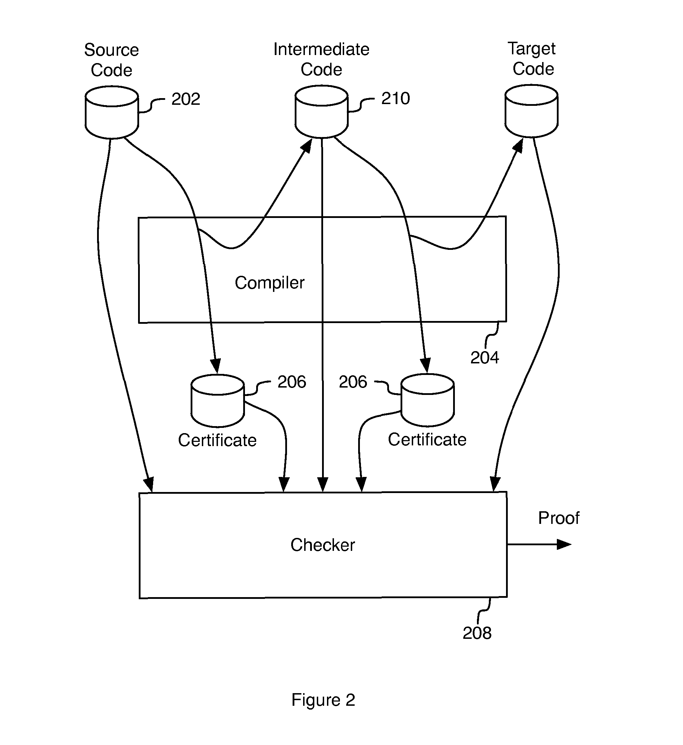

Figure 2 is a schematic of another system for source code specific compilation validation as described by Jan Olaf Blech and Benjamin Gregoire 'Certifying compilers using higher-order theorem provers as certificate checkers', Format Methods in System Design, 38(1): 33-61, 2010 the entirety of which is incorporate herein by reference. This is a more sophisticated approach to compilation validation where the trust in the compiler is removed:
- when compiling a source module 202, the compiler 204 generates "certificates" 206: effectively lemmata that can later be used in a formal proof that the output of the compiler is logically identical to the input. The approach is designed so that even if the certificate 206 is wrongly generated, the compiler 204 will not be found to be error-free (i.e., the certificates 206 are not trusted because they are being generated by the compiler 204 whose operation is being checked); and
- when the compilation is complete, a theorem prover (a.k.a. checker) 208 acts on the input program 202, the compiled (intermediate or target) code 210 and the certificates 206 and either proves the accuracy of the compiler 204 or demonstrates that it has not acted correctly.

Note that this "certifies" the compiler 204 only for that particular compilation: this must be repeated for each compilation. One advantage of this approach is that it does not try to demonstrate the compiler's accuracy for *all* programs, just the programs that form part of the system being developed. In the future this technique may be a viable path to compiler validation, but at present the theorem provers necessary to check the correctness are not time efficient. Verifying a theorem prover is tedious and complex and, many language features (e.g., pointers) cannot be handled.

The technique described below preserves the advantages of compilation, rather than compiler validation and provides an approach that is more independent of the source language than other techniques such as those described above.

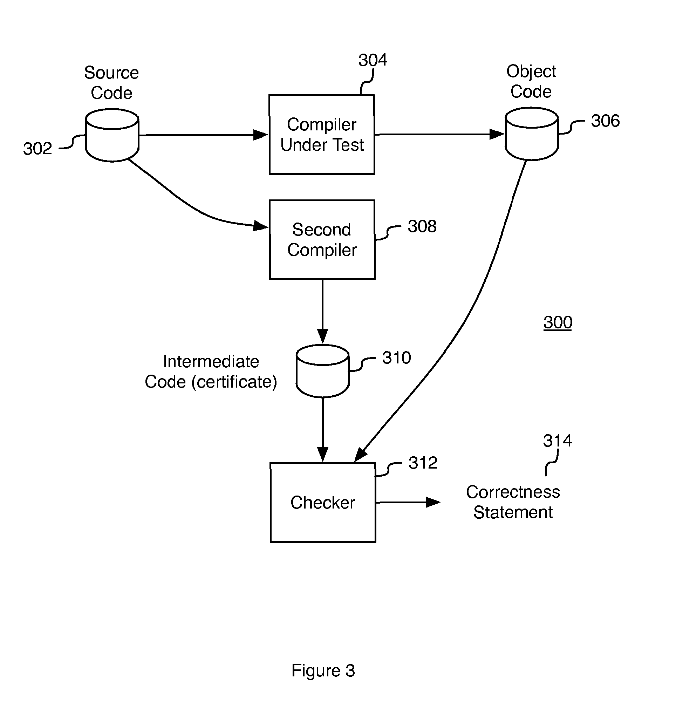

Figure 3 is a schematic of a system for compilation validation. In system 300 for compilation validation a second compiler 308 is used. LLVM, an open source compiler infrastructure (formerly known as Low Level Virtual Machine) released by the University of Illinois, is a suitable candidate (provided it is not the compiler under test 304) for the second compiler 308 because of its well-defined and well-understood intermediate code 310 for which many manipulation tools exist. The intermediate code 310 forms the "certificate" required by the checker 312.

This approach expands a Trusted Computing Base (TCB) by assuming that the same compiler bug will not appear in both the compiler under test 304 and the second compiler 308. The checker 312 may be significantly simpler than the theorem prover required for the approach described above with reference to Figure 2 and has several useful characteristics including:
- The LLVM intermediate code 310 is well-defined. Tools such as the S2E Project (accessible at https://s2e.epfl.ch) RevGen exist to convert object-code (e.g. Intel x86, ARM and PowerPC) into LLVM intermediate code 310 and such additional transformation may make the checker 312 simpler while providing an extra level of diversity on the compiler paths.
- The checker 312 may be deployed incrementally, adding additional features and thereby strengthening the confidence in the result 314, one by one. Independent validations may be carried out for type safety, path integrity, data integrity and other characteristics of the compiler output 306.
- As the checker 312 does not read the source code 302, the same system 300 can be used for any computer language (e.g. may be computer language agnostic).
- Because the checker 312 may not create formal proofs, it may execute much faster than other tools.

The second compiler 308 does not need to be LLVM; it may be, for example, a variant or derivative of LLVM, a purpose-written compiler only producing intermediate code 310 or another compiler that generates intermediate code and/or certificates. In that case the second compiler 308 could itself be certified and, as it only has to run in one environment, certification would be relatively easy to obtain and maintain.

To compare the intermediate code 310 and compilation results 306, the checker 312 may use any of several processes or any combination thereof. In one process based on static analysis, various static checks may be carried out to compare the two compilation outputs 306 and 310. These include, for example, checking that:
- the two programs (compilation outputs 306 and 310) have isomorphic call graphs (including calls to external functions). This is a feature to check automatically.
- the return values from each of the functions in the two programs are identically typed.
- the loop invariants of the two programs are the same. In practice, depending on the level of optimization of the two compilers 304 and 308, it is sometimes not possible to identify corresponding loops in the two programs 306 and 310. Where correspondence can be made, invariants may be generated as described by K. Rustan M. Leino and Francesco Logozzo. 'Loop invariants on demand', in Proceedings of the 3rd Asian Symposium on Programming Languages and Systems, APLAS'05, Springer-Verlag, 2005, the entirety of which is incorporate herein by reference. Note that the requirements on the invariants for the purposes outlined in this description are less than those required for the program correctness proving of the reference. A loop invariant is a condition that must be true on entry into a loop and that is guaranteed to remain true as the loop iterates. On exit from the loop, the loop invariant and the loop termination condition are guaranteed or substantially guaranteed.

These checks may be inadequate to demonstrate compilation correctness, but, if differences are found at this level, no further analysis is required.

Note that even with call graphs, the compiler outputs 306 and 310 may differ. Consider the example code segment:

```
       int x;
         if (x & 0x1)
            {
            .....
           if (x % 2 == 0)
              y = doit2(x);
```

Clearly doit2() will never actually be called (it would require x to be both odd and even) and it is possible that one compiler notices this and does not generate the call, while the other compiler does not notice and so produces output. Such conditions represent error conditions (dead code) and may be detected and removed before compilation validation is performed. If they are not, then the compilation validation may have the useful side-effect of detecting such code.

Symbolic execution (or "symbolic evaluation") is the analysis of programs by tracking symbolic rather than actual values. Tools such as, for example, Klee (an open source symbolic virtual machine sub-project of LLVM released by the University of Illinois) may be used to carry this out on LLVM intermediate code 310 and it is also possible to carry out symbolic execution on object code 306. In another approach symbolic execution may be executed on both compiler output forms:
- to demonstrate that the reachable values of observable variables (i.e., those variables that are returned by a function or written to an external device. In general, non-observable values are local to a function. For example loop counters or variables holding intermediate results are the same for both program representations. Again, while not guaranteeing correctness, this provides an increased level of confidence.
- to extract and compare stronger invariants. Consider, for example, the following code snippet:

   ```
              int findMax(int *a, int len)
              {
                 max = 0;
                 i=0;
                 for (i=0; i < len; i++)
                    {
                    if (a[i] > max)
              max = a[i]; }
              return max; }
```

   Symbolic execution can derive two invariants that hold at the return statement:
   1. ∀x(0≤x<i)→a[x]≤max
   2. i≥len
   The second of these does not relate to an observable variable and may be ignored. However, the first does and should therefore be true in both versions of the program 306 and 310. It is possible that an invariant of this type is too strong→while one compiler produced code that satisfied it, that was not strictly necessary. In this case a determination may be made whether the full strength is required, but such cases should be rare.
- to generate module tests. Tools such as Klee may use symbolic execution to generate concrete module test cases with good path and branch coverage. As the two programs 306 and 310 being compared derive from the same source code 302, the test cases generated for each can be applied to the other. Execution of the combined test cases gives a strong confidence in the correctness of the compilation 314.

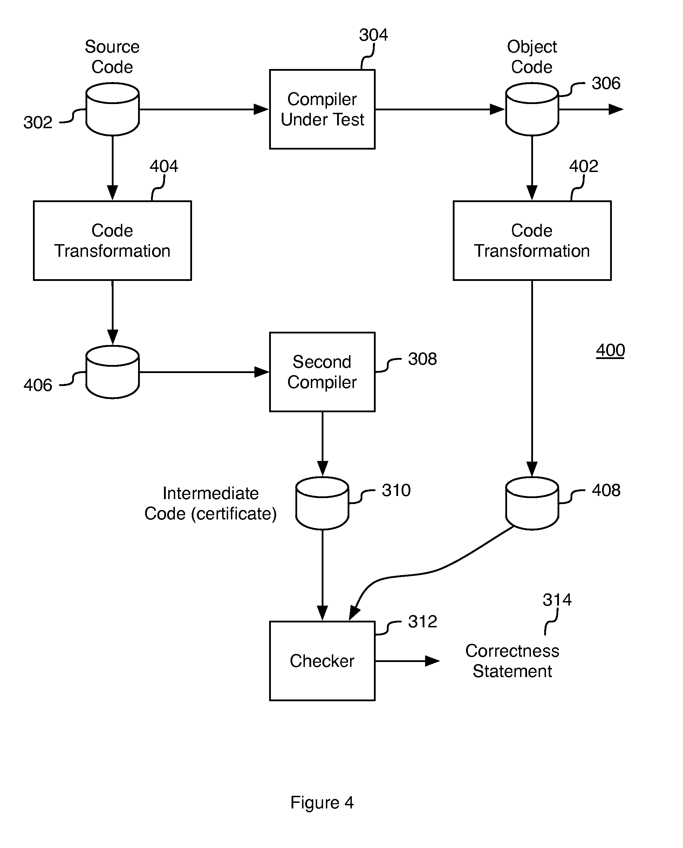

Figure 4 is another schematic of a system for compilation validation. The use of a tool 402 such as RevGen to translate the object code 306 from the compiler under test 304 into LLVM intermediate code 408 has been discussed above. As well as simplifying the work of the checker 312, this may add additional diversity and redundancy to the system 400.

Additional diversity can also be obtained by pre-processing the source program 302 with a source-code transformation tool 404 such as CIL as described by George A. Reis, Jonathan Chang, Neil Vachharajani, Ram Rangan, David I. August, and Shubhendu S. Mukherjee. Software-controlled fault tolerance, TACO, 2(4):366-396, 2005, the entirety of which is incorporated herein by reference. This tool 404 transforms a C program into a semantically equivalent, but much simpler, program 406. This places less stress on the compiler and, given the magnitude of the transformation, even using the compiler under test 304 as the second compiler would, in principle, provide a level of confidence 314. The CIL tool 404 also emits other useful information (e.g., control and data flow graphs) that may be used to assist the checker 312.

An approach as described herein may give many of the advantages of compilation validation without the intractability of a formal proof. The system and method for compilation validation may produce a level of confidence while not necessarily producing a proof.

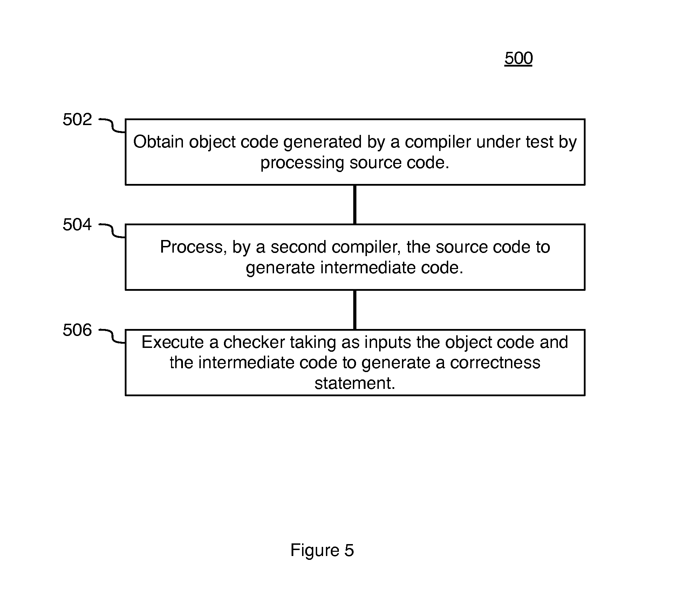

Figure 5 is a representation of a method for compilation validation. The method 500 may be, for example, implemented using the systems 300, 400 and 600 described herein with reference to Figures 3, 4 and 6. The method 500 may include the following acts. Obtaining 502 object code generated by a compiler under test by processing source code. Processing, by a second compiler, 504 the same source code to generate intermediate code (a.k.a. certificates). Executing a checker 506 taking as inputs the object code and the intermediate code to generate a correctness statement. The correctness statement may include a level of confidence reflecting a measure of confidence in the correctness of the object code generated by the compiler under test. The checker may include any of, or a combination of, static analysis, symbolic execution and formal proof. The method 500 may further include using a tool, to translate the object code generated by the compiler under test into a second intermediate code and replacing the input of the object code to the checker with input of the second intermediate code. In a further variant, the method 500 may include pre-processing the source code using a source-code transformation tool to generate a semantically equivalent, but much simpler, program that is processed by the second compiler in place of the source code.

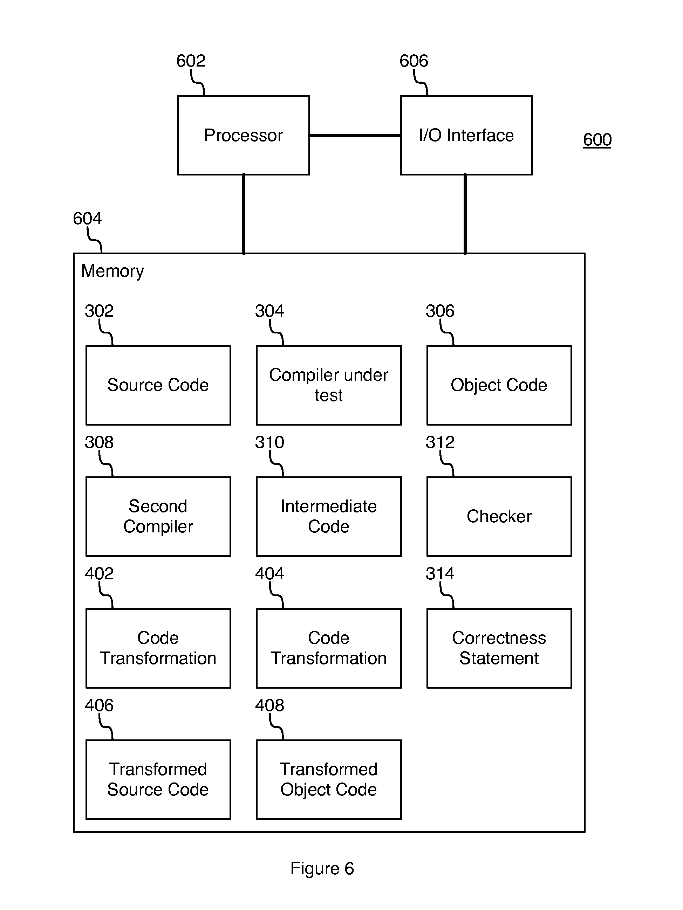

Figure 6 is a schematic of a system for compilation validation. The system 600 comprises a processor 602, memory 604 (the contents of which are accessible by the processor 602), and an I/O interface 606.

The processor 602 may comprise a single processor or multiple processors that may be disposed on a single chip, on multiple devices or distributed over more that one system. The processor 602 may be hardware that executes computer executable instructions or computer code embodied in the memory 604 or in other memory to perform one or more features of the system. The processor 602 may include a general purpose processor, a central processing unit (CPU), a graphics processing unit (GPU), an application specific integrated circuit (ASIC), a digital signal processor (DSP), a field programmable gate array (FPGA), a digital circuit, an analog circuit, a microcontroller, any other type of processor, or any combination thereof.

The memory 604 may comprise a device for storing and retrieving data, processor executable instructions, or any combination thereof. The memory 604 may include non-volatile and/or volatile memory, such as a random access memory (RAM), a read-only memory (ROM), an erasable programmable read-only memory (EPROM), or a flash memory. The memory 604 may comprise a single device or multiple devices that may be disposed on one or more dedicated memory devices or on a processor or other similar device. Alternatively or in addition, the memory 604 may include an optical, magnetic (hard-drive) or any other form of data storage device.

The memory 604 may store computer code, such as a compiler under test 304, a second compiler 308, a checker 312, source code transformation tool 404 and an object code transformation tool 402 as described herein. The computer code may include instructions executable with the processor 602. The computer code may be written in any computer language, such as C, C++, assembly language, channel program code, and/or any combination of computer languages. The memory 604 may store information in data structures including, for example, source code 302, object code 306, intermediate code (a.k.a. certificates) 310, correctness statements 314, transformed source code 406, and transformed object code 408.

The I/O interface 606 may be used to connect devices such as, for example, a display, a keyboard, pointing device, and to other components of the system 600.

All of the disclosure, regardless of the particular implementation described, is exemplary in nature, rather than limiting. The system 600 may include more, fewer, or different components than illustrated in Figure 6. Furthermore, each one of the components of system 600 may include more, fewer, or different elements than is illustrated in Figure 6. Flags, data, databases, tables, entities, and other data structures may be separately stored and managed, may be incorporated into a single memory or database, may be distributed, or may be logically and physically organized in many different ways. The components may operate independently or be part of a same program or hardware. The components may be resident on separate hardware, such as separate removable circuit boards, or share common hardware, such as a same memory and processor for implementing instructions from the memory. Programs may be parts of a single program, separate programs, or distributed across several memories and processors.

The functions, acts or tasks illustrated in the figures or described may be executed in response to one or more sets of logic or instructions stored in or on a non-transitory computer readable media. The functions, acts or tasks are independent of the particular type of instructions set, storage media, processor or processing strategy and may be performed by software, hardware, integrated circuits, firmware, micro code and the like, operating alone or in combination. Likewise, processing strategies may include multiprocessing, multitasking, parallel processing, distributed processing, and/or any other type of processing. In one embodiment, the instructions are stored on a removable media device for reading by local or remote systems. In other embodiments, the logic or instructions are stored in a remote location for transfer through a computer network or over telephone lines. In yet other embodiments, the logic or instructions may be stored within a given computer such as, for example, a CPU.

While various embodiments of the system and method for on-demand user control have been described, it will be apparent to those of ordinary skill in the art that many more embodiments and implementations are possible within the scope of the present invention. Accordingly, the invention is not to be restricted except in light of the attached claims and their equivalents.

## Claims

1. A method for compilation validation comprising:
obtaining 502 object code 306 generated by a compiler under test 304 by processing source code 302;
processing 504, by a second compiler 308, the source code 302 to generate intermediate code 310; and
executing 506 a checker 312 taking as inputs the object code 306 and the intermediate code 310 to generate a correctness statement 314.

2. The method for compilation validation of claim 1, where the checker 312 validates any one or more of a type safety, a path integrity and a data integrity.

3. The method for compilation validation of claim 1, where the second compiler 308 is any of an LLVM compiler, a variant or a derivative of the LLVM compiler, a purpose-written compiler producing intermediate code, and another compiler that generates intermediate code or certificates.

4. The method for compilation validation of claim 1, where the second compiler 308 comprises a certified compiler.

5. The method for compilation validation of claim 1, where the executing 506 the checker 312 includes comparing the object code 306 and intermediate code 310 for any one or more of isomorphic call graphs, identically typed return values, and identical loop invariants.

6. The method for compilation validation of claim 1, where the executing 506 the checker 312 includes symbolic execution of the object code 306 and the intermediate code 310.

7. The method for compilation validation of claim 1, further comprising pre-processing the source code 302 with a source code transformation tool 404 into a semantic equivalent 406 before processing by the second compiler 308.

8. The method for compilation validation of claim 7, where the second compiler 308 is the same as the compiler under test 304.

9. The method for compilation validation of claim 1, where the checker 312 processes control flow graphs and data flow graphs.

10. The method for compilation validation of claim 1, where the correctness statement 314 includes a level of confidence.

11. The method for compilation validation of claim 1, where executing 506 the checker 312 includes any one or more of a static analysis, a symbolic execution and a formal proof.

12. The method for compilation validation of claim 1, further comprising translating 402 the object code 306 into a second intermediate code 408 before being processed by the checker 312.

13. A system for compilation validation comprising:
one or more processors 602; and
memory 604 storing instructions accessible by the one or more processors, the instructions, when executed by the one or more processors, configuring the system to implement the methods of any of claims 1 to 12.

14. Computer readable media storing instructions, when executed by one or more processors 604, for configuring a system for compilation validation to implement the methods of any of claims 1 to 12.
